# FASCICULE DE BREVET EUROPEEN

(11) **EP 2 206 403 B1**
(45) Date de publication et mention de la délivrance du brevet: **28.03.2012**
(21) Numéro de dépôt: 08845871.6
(22) Date de dépôt: 13.10.2008
(51) Int. Cl.: H04W 88/00, H04Q 3/00, H04M 3/42, H04M 3/56

(54) **ADAPTATION D'UNE COMMUNICATION IMPLIQUANT UN USAGER PRESENTANT UNE LIMITATION PHYSIQUE**
VERFAHREN ZUR ANPASSUNG EINER KOMMUNIKATION, WORAN EIN EINE PHYSISCHE BEGRENZUNG AUFWEISENDER BENUTZER BETEILIGT IST
METHOD OF ADAPTING A COMMUNICATION INVOLVING A USER EXHIBITING A PHYSICAL LIMITATION

(30) Priorité: 29.10.2007 FR 0758654
(43) Date de publication de la demande: 14.07.2010
(73) Titulaire: Alcatel Lucent, 75007 Paris (FR)
(72) Inventeur: DURECU, Olivier, F-91620 Nozay (FR); LEGAT, Bruno, F-91620 Nozay (FR)
(74) Mandataire: Mouney, Jérôme
(86) Numéro de dépôt international: PCT/FR2008/051854
(87) Numéro de publication internationale: WO 2009/056717

(56) Documents cités:
- US-A1- 2005 094 777
- MAGEDANZ T ET AL: "The IMS Playground Fokus - An Open Testebed for Next Generation Network Multimedia Services" TESTBEDS AND RESEARCH INFRASTRUCTURES FOR THE DEVELOPMENT OF NETWORKS AND COMMUNITIES, 2005. TRIDENTCOM 2004. FIRST INTERNATIONAL CONFERENCE ON TRENTO, ITALY 23-25 FEB. 2005, PISCATAWAY, NJ, USA,IEEE, 23 février 2005 (2005-02-23), pages 2-11, XP010774253 ISBN: 978-0-7695-2219-7

## Description

L'invention concerne les réseaux de communication comprenant un coeur de réseau dit de services, par exemple de type IMS (pour « IP Multimedia Subsystem »).

Comme le sait l'homme de l'art, les coeurs de réseau de services, comme par exemple ceux de type IMS, ont été développés par des opérateurs de réseau de communication (offrant éventuellement une connectivité IP) afin d'offrir des services spécifiques à des usagers abonnés (ou souscripteurs). A titre d'exemple, un coeur de réseau de services (ou domaine) IMS peut permettre à un usager d'afficher sur l'écran de son terminal de communication (mobile ou fixe ou encore sans fil) une page Internet personnelle d'un utilisateur appelant, ou de disposer de services de communication vocale améliorée ou de services multimédia IP ou encore de services de messagerie instantanée, ou de faire sonner plusieurs de ses terminaux lorsqu'il est appelé. La mise en oeuvre de ces services (IMS) se fait généralement au moyen du protocole de signalisation SIP (pour « Session Initiation Protocol »).

Il est rappelé que la connexion d'un terminal de communication d'usager à un coeur de réseau de services (ou domaine), éventuellement IMS, se fait par l'intermédiaire d'un réseau d'accès d'un réseau mobile de type dit paquet ou « PS » (pour « Packet Switched »), par exemple un réseau GPRS, 3G (UMTS), (W)CDMA, HSDPA, ou FOMA, ou d'un réseau d'accès d'un réseau de communication fixe, comme par exemple un réseau ADSL, ou encore d'un réseau d'accès d'un réseau de communication sans fil ou WLAN (pour « Wireless Local Area Network »), comme par exemple un réseau conforme au standard IEEE 802.11a, ETSI HiperLAN/2, Wi-Fi (IEEE 802.11g) ou WiMAX (regroupement des standards 802.16 et HiperMan, notamment).

Un exemple se trouve dans MAGEDANZ T ET AL: "The IMS Playground @ Fokus - An Open Testebed for Next Generation Network Multimedia Services" TESTBEDS AND RESEARCH INFRASTRUCTURES FOR THE DEVELOPMENT OF NETWORKS AND COMMUNITIES, 2005. TRIDENTCOM 2004. FIRST INTERNATIONAL CONFERENCE ON TRENTO ITALY 23-25 FEB. 2005, PISCATAWAY, NJ, USA, IEEE, 23 février 2005 (2005-02-23), pages 2-11, XP010774253 ISBN: 978-0-7695-2219-7.

Certains usagers d'un réseau de communication disposant d'un coeur de réseau de services (ou domaine), éventuellement IMS, font l'objet de limitation(s) physique(s) (ou handicap(s) ou encore incapacité(s) physique(s)) qui réduisent notablement leurs possibilités de communiquer avec des tiers. Ainsi, une personne souffrant d'une cécité ne peut pas lire les messages qui lui sont transmis par des tiers, une personne souffrant d'une surdité ne peut ni participer à une conversation téléphonique ni être alertée par une sonnerie d'appel, une personne souffrant d'une incapacité à décrocher un combiné téléphonique ne peut pas répondre à l'appel téléphonique d'un tiers, ou une personne souffrant d'une incapacité à saisir des caractères alphanumériques au moyen d'une interface (clavier ou « souris ») ne peut ni accéder à des messages textuels, éventuellement de type instantané, ni répondre à de tels messages textuels.

Certains paramètres de fonctionnement de certains terminaux peuvent être adaptés afin de tenir compte d'une limitation physique. Ainsi, il est possible de configurer le terminal mobile (ou cellulaire) d'un usager afin qu'il vibre au lieu de sonner lorsqu'un tiers essaye de le joindre, ou bien afin qu'il affiche les messages textuels avec une police de caractères particulière (par exemple beaucoup plus grosse). Mais, ces configurations (ou adaptations) demeurent très limitées, mais surtout locales et donc restreintes exclusivement au seul terminal de l'usager présentant une limitation physique.

L'invention a donc pour but d'améliorer la situation.

Elle propose à cet effet un procédé, dédié à l'adaptation de communications dans un réseau de communication à coeur de réseau de services, et consistant :
- à adjoindre à des profils d'usagers (abonnés à des services du réseau) un champ d'information qui décrit au moins une limitation physique, et
- en cas de réception d'un message de signalisation concernant une communication impliquant un usager dont le profil d'usager décrit une limitation physique donnée, à adjoindre à ce message de signalisation un entête représentatif de cette limitation physique, de sorte que lorsqu'un équipement de communication impliqué dans la communication avec l'usager reçoit ce message de signalisation, il adapte, s'il est concerné et s'il le désire, le type et/ou au moins un paramètre de la communication avec l'usager en fonction de la limitation physique.

Le procédé selon l'invention peut comporter d'autres caractéristiques qui peuvent être prises séparément ou en combinaison, et notamment :
- chaque adaptation peut par exemple être choisie parmi (au moins) l'augmentation de taille de la police de caractère du texte à afficher sur un écran, la conversion de données audio en données textuelles, la conversion de données textuelles en données audio, le changement du mode d'appel par sonneries en mode d'appel par vibrations, et l'utilisation de messages textuels, éventuellement de type instantané, à la place d'une communication téléphonique ;
- chaque limitation physique peut par exemple être choisie parmi (au moins) une déficience visuelle, la cécité, une déficience auditive, la surdité, une paralysie, et une incapacité à décrocher et/ou à saisir des caractères alphanumériques ;
- lorsque le coeur de réseau est de type IMS, l'adjonction aux messages de signalisation des entêtes représentatifs de limitation(s) physique(s) peut se faire dans un module de type S-CSCF qu'il comprend.

L'invention propose également un coeur de réseau de services pour un réseau de communication, comprenant :
- des moyens de stockage d'informations d'usagers propres à stocker des profils d'usagers (abonnés à des services du réseau) comportant un champ d'information décrivant au moins une limitation physique, et
- un équipement intermédiaire de traitement de messages de signalisation chargé, lorsqu'il reçoit un message de signalisation concernant une communication impliquant un usager dont le profil d'usager décrit une limitation physique donnée, d'adjoindre à ce message de signalisation un entête représentatif de cette limitation physique.

Le coeur de réseau selon l'invention peut comporter d'autres caractéristiques qui peuvent être prises séparément ou en combinaison, et notamment :
- chaque limitation physique peut par exemple être choisie parmi (au moins) une déficience visuelle, la cécité, une déficience auditive, la surdité, une paralysie, et une incapacité à décrocher et/ou à saisir des caractères alphanumériques ;
- chaque entête adjoint à un message de signalisation peut être destiné à permettre à un équipement de communication qui reçoit ce dernier et qui est impliqué dans une communication avec un usager dont le profil d'usager décrit une limitation physique donnée, d'adapter, s'il est concerné et s'il le désire, le type et/ou au moins un paramètre de la communication avec cet usager en fonction de cette limitation physique ;
   ➢ chaque adaptation peut par exemple être choisie parmi (au moins) l'augmentation de la taille de la police de caractère du texte à afficher sur un écran, la conversion de données audio en données textuelles, la conversion de données textuelles en données audio, le changement du mode d'appel par sonneries en mode d'appel par vibrations, et l'utilisation de messages textuels, éventuellement de type instantané, à la place d'une communication téléphonique ;
- lorsqu'il est de type IMS, l'équipement intermédiaire de traitement de messages de signalisation peut être un module de type S-CSCF.

L'invention est particulièrement bien adaptée, bien que de façon non exclusive, aux coeurs de réseau de services (ou domaines) de type IMS.

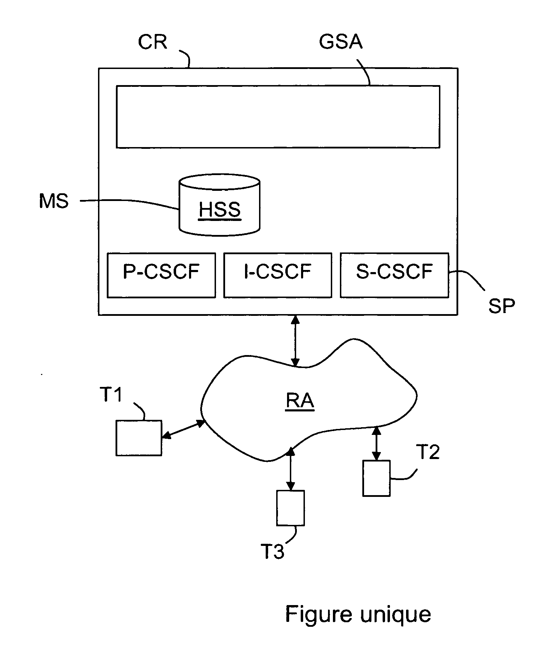

D'autres caractéristiques et avantages de l'invention apparaîtront à l'examen de la description détaillée ci-après, et du dessin annexé, sur lequel l'unique figure illustre de façon très schématique et fonctionnelle un coeur de réseau IMS couplé à un réseau d'accès et équipé d'un module HSS et d'un serveur d'adjonction selon l'invention, de type S-CSCF. Le dessin annexé pourra non seulement servir à compléter l'invention, mais aussi contribuer à sa définition, le cas échéant.

L'invention a pour objet de permettre l'adaptation de communication impliquant des terminaux de communication appartenant à des usagers d'un coeur de réseau de services (ou domaine), qui font l'objet de limitation(s) physique(s).

Dans ce qui suit, on considère à titre d'exemple illustratif et non limitatif que les usagers sont abonnés à des services d'un réseau de communication couplé à un coeur de réseau de services (ou domaine) de type IMS. Mais, l'invention n'est pas limitée à ce type de coeur de réseau de services.

Par ailleurs, dans ce qui suit, on ne considérera que le coeur de réseau de services (ou domaine IMS) CR indépendamment du ou des réseaux d'accès RA via lequel (lesquels) il peut être connecté à des terminaux de communication Ti (ici i = 1 à 3). Tout type de réseau d'accès RA peut en effet assurer la liaison entre un coeur de réseau (ou domaine) IMS CR selon l'invention et un terminal de communication Ti (fixe ou mobile (ou portable)), et notamment un réseau d'accès radio d'un réseau mobile (ou cellulaire) de type dit paquet ou PS, par exemple un réseau GPRS, 3G (UMTS), (W)CDMA, HSDPA, ou FOMA, ou un réseau d'accès d'un réseau de communication fixe, comme par exemple un réseau xDSL, ou encore un réseau d'accès radio d'un réseau local sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee).

On entend ici par « terminal de communication » Ti un équipement de communication pouvant se connecter à au moins un réseau d'accès RA d'un réseau de communication couplé à un coeur de réseau de services (ici IMS) CR, de manière à échanger des données ou signaux (éventuellement radio) avec un autre équipement de communication. Il pourra donc s'agir, par exemple, d'un téléphone fixe ou mobile (ou cellulaire), d'un assistant personnel numérique (ou PDA) communiquant ou d'un ordinateur fixe ou portable équipé d'un dispositif de communication.

On a schématiquement représenté sur l'unique figure un coeur de réseau de services (ou domaine) IMS CR auquel est connecté (directement ou via une passerelle) un réseau d'accès RA d'un réseau de communication.

Les constituants d'un coeur de réseau IMS CR étant bien connus de l'homme de l'art, ils ne seront pas décrits ici en détails, comme c'est notamment le cas dans la spécification RFC 23.002 de l'organisme 3GPP, accessible sur le site Internet du 3GPP. Il est simplement rappelé ci-après quelques fonctionnalités de modules du coeur de réseau IMS CR, utiles à la compréhension de l'invention.

Un coeur de réseau IMS CR permet à des usagers abonnés de disposer de services IMS spécifiques lorsqu'ils sont raccordés à leur réseau d'appartenance ou éventuellement à un réseau visité dans le cas du « roaming ».

Un coeur de réseau IMS comporte notamment un module de type P-CSCF (pour « Proxy-Call Session Control Function »), un module de type S-CSCF (pour « Serving-Call Session Control Function »), un module de type 1-CSCF (pour « Interrogating-Call Session Control Function ») et groupe de serveurs d'application GSA.

Le module de type P-CSCF est un module de contrôle de session IMS. Il est le premier point de contact avec le coeur de réseau IMS CR pour un terminal Ti d'un usager abonné. Ce module P-CSCF comprend une fonction CSCF assurant le routage de messages selon le protocole SIP (« Session Initiation Protocol »). Il assure généralement, et notamment, une fonction de sécurité, une fonction de contrôle du plan d'utilisateur (ou « user plane »), une fonction de compression SIP, une fonction de génération d'identifiants de taxation, une fonction d'assertion d'identité de l'abonné, une fonction de correspondance entre l'adresse publique et l'adresse IP de l'abonné, et une fonction de gestion de routage vers et depuis un autre module de contrôle de session appelé S-CSCF.

Le module de type S-CSCF constitue la porte d'entrée vers les services IMS offerts par le coeur de réseau IMS CR. A cet effet, il est connecté à un ou plusieurs serveurs d'application du groupe GSA. Il est notamment chargé de l'authentification des abonnés et du stockage de l'adresse du module P-CSCF auquel est raccordé le terminal Ti d'un usager abonné du coeur de réseau IMS CR.

Le module de contrôle de session ou module I-CSCF est chargé d'initier l'enregistrement d'un terminal de communication Ti auprès du module S-CSCF qui appartient au coeur de réseau IMS (dit « receveur ») auprès duquel il a souscrit son abonnement aux services IMS. Il est également chargé de rechercher où se trouvent les abonnés aux services IMS de son coeur de réseau IMS CR. A cet effet, il est généralement connecté aux coeurs des réseaux (ou domaines) IMS d'autres opérateurs que le sien, et plus précisément à leurs modules S-CSCF.

Les serveurs d'application (ou « Application servers ») du groupe GSA sont chargés d'offrir des services IMS spécifiques. Par exemple, l'un d'entre eux est un serveur vocal, un autre est un serveur de messagerie électronique (« e-mail »), un autre est un serveur de messagerie instantanée (« Instant Messaging » (IM)), un autre est un serveur Internet (ou serveur web), chargé de fournir des accès à des pages web de site(s) web, et un encore un autre est un serveur de données relationnelles, éventuellement de type XDMS (« XML Data Management Server »), chargé de fournir des informations relatives aux usagers du coeur de réseau IMS CR (listes (ou groupes) de contacts, profils d'usagers, autorisations d'accès et de présence, etc). Certains de ces serveurs d'application, comme par exemple le serveur vocal, le serveur de messagerie électronique, le serveur de messagerie instantanée et le serveur web sont agencés pour participer à des communications avec des terminaux de communication Ti.

L'invention propose de mettre en oeuvre un nouveau procédé destiné à adapter les communications qui impliquent au moins un usager abonné au coeur de réseau IMS CR et faisant l'objet d'au moins une limitation physique.

On entend ici par « limitation physique » tout type de handicap ou d'incapacité physique, partielle ou totale, dont fait l'objet un usager et susceptible de limiter ses possibilités de communiquer avec des tiers. Par conséquent, il pourra par exemple s'agir, non exhaustivement et non limitativement, d'une déficience visuelle, de la cécité, d'une déficience auditive, de la surdité, d'une paralysie d'un membre (en particulier supérieur), ou d'une incapacité à décrocher un combiné et/ou à saisir des caractères alphanumériques avec une interface homme/machine (clavier ou souris).

Le procédé selon l'invention consiste tout d'abord à adjoindre à des profils d'usagers (abonnés au coeur de réseau IMS CR) un champ d'information, dit de capacité, qui indique au moins une limitation physique.

Dans un coeur de réseau IMS, les données qui définissent les profils d'usagers sont généralement stockées dans un module de stockage d'informations d'utilisateurs (ou base de données de souscription), appelé HSS (pour « Home Subscriber Server »). Par conséquent, il est ici avantageux de stocker le champ d'information de capacité dans le module HSS MS.

Il est important de noter que ce champ d'information de capacité est renseigné à la demande de l'usager, lors de son enregistrement auprès du coeur de réseau IMS CR.

Le procédé selon l'invention consiste ensuite, lorsque le coeur de réseau IMS CR reçoit un message de signalisation concernant une communication qui implique un usager dont le profil d'usager décrit (au moins) une limitation physique donnée (dans le champ d'information de capacité), à adjoindre à ce message de signalisation un entête qui représente cette limitation physique.

Cette adjonction d'entête peut se faire au moyen d'un équipement de réseau intermédiaire (de type « proxy ») SP du coeur de réseau IMS CR. Dans le cas d'un coeur de réseau IMS les messages de signalisation sont de type SIP. Par conséquent, l'équipement de réseau intermédiaire SP est par exemple ce que l'homme de l'art appelle un proxy SIP. Il peut par exemple s'agir du module S-CSCF.

Ainsi, lorsqu'un équipement de communication est impliqué dans une communication avec un usager présentant (au moins) une limitation physique enregistrée et qu'il reçoit un message de signalisation ayant fait l'objet d'une adjonction d'un entête représentatif de cette limitation physique, il peut adapter le type et/ou au moins un paramètre de la communication avec l'usager en fonction de la limitation physique, s'il constitue l'équipement chargé de procéder à cette adaptation et s'il désire effectuer cette adaptation.

Il est important de noter que tout type d'équipement de communication susceptible de devoir adapter des communications en fonction d'au moins une limitation physique représentée dans un entête adjoint est ici concerné. Par conséquent, il pourra aussi bien s'agir d'un équipement ou élément de réseau, comme par exemple un serveur d'application, qu'un terminal de communication Ti d'usager. On comprendra en effet que l'équipement (les équipements) de communication qui est (sont) impliqué(s) dans une (des) adaptation(s) de communication varie(nt) en fonction du (des) type(s) d'adaptation à effectuer. On notera que pour une même communication plusieurs (au moins deux) adaptations peuvent être effectuées, ce qui peut éventuellement nécessiter l'intervention de plusieurs équipements (ou éléments) de communication différents.

On notera qu'une adaptation concerne généralement un usager abonné qui est appelé. Mais, elle peut également concerner un usager abonné qui initie une communication.

Parmi toutes les adaptations qui peuvent être effectuées, on peut notamment citer (de façon non limitative et non exhaustive) l'augmentation de la taille de la police de caractère du texte à afficher sur un écran, la conversion de données audio en données textuelles (« speech-to-text »), la conversion de données textuelles en données audio (« text-to-speech »), le changement du mode d'appel par sonneries en mode d'appel par vibrations, et l'utilisation de messages textuels, éventuellement de type instantané, à la place d'une communication téléphonique.

Ainsi, lorsque l'usager est sourd et qu'il est impliqué dans une communication audio (téléphonique), l'adaptation peut consister à convertir les données audio qui lui sont destinées en données de texte que l'on affiche sur l'écran de son terminal de communication, ou bien à proposer une communication par messagerie instantanée, de type « chat ». Dans ces cas, l'adaptation se fait par exemple dans un équipement de communication tel qu'un module x-CSF, un serveur d'application ou un terminal de communication Ti. En complément, on peut également changer dans son terminal de communication Ti le mode d'appel par sonneries par le mode d'appel par vibrations.

Lorsque l'usager présente une déficience auditive et qu'il est impliqué dans une communication audio (téléphonique), l'adaptation peut consister à augmenter notablement le volume sonore de sortie du haut-parleur de son terminal de communication Ti, ou bien à proposer une communication par messagerie instantanée, de type « chat ». Dans ce dernier cas, l'adaptation se fait par exemple dans un équipement de communication tel qu'un module x-CSF, un serveur d'application ou un terminal de communication Ti. En complément, on peut également changer dans son terminal de communication Ti le mode d'appel par sonneries par le mode d'appel par vibrations.

Lorsque l'usager est aveugle et qu'il est impliqué dans une communication textuelle (messagerie, éventuellement instantanée), l'adaptation peut consister à convertir les données textuelles qui lui sont destinées en données audio que l'on diffuse au moyen du haut-parleur de son terminal de communication, ou bien à proposer une communication audio (téléphonique). Dans ces cas, l'adaptation se fait par exemple dans un équipement de communication tel qu'un module x-CSF, un serveur d'application ou un terminal de communication Ti.

Lorsque l'usager présente une déficience visuelle et qu'il est impliqué dans une communication textuelle (messagerie, éventuellement instantanée), l'adaptation peut consister à augmenter la taille de la police de caractère du texte à afficher sur l'écran de son terminal de communication Ti, ou bien à proposer une communication audio (téléphonique). Dans ce dernier cas, l'adaptation se fait par exemple dans un équipement de communication tel qu'un module x-CSF, un serveur d'application ou un terminal de communication Ti.

Lorsque l'usager est paralysé ou présente une incapacité à décrocher un combiné et/ou à saisir des caractères alphanumériques avec une interface homme/machine (clavier ou souris), et qu'il est impliqué dans une communication textuelle (messagerie, éventuellement instantanée), l'adaptation peut consister à convertir les données textuelles qui lui sont destinées en données audio que l'on diffuse au moyen du haut-parleur de son terminal de communication, ou bien à proposer une communication audio (téléphonique). Dans ces cas, l'adaptation se fait par exemple dans un équipement de communication tel qu'un module x-CSF, un serveur d'application ou un terminal de communication Ti.

Pour permettre une adaptation de communication, l'équipement de communication dispose d'informations d'adaptation qui lui sont propres et qu'il stocke dans des moyens de stockage, comme par exemple une mémoire. Ces informations d'adaptation peuvent par exemple être contenues dans une table qui établit une correspondance entre différentes limitations physiques et des adaptations de communication à effectuer.

Il est important de noter qu'une adaptation peut également et éventuellement permettre de convertir des données audio (respectivement textuelles), issues du terminal Ti d'un usager présentant une limitation physique et destinées à un tiers, en données textuelles (respectivement audio) lorsque la communication établie entre ce tiers et cet usager est de type messagerie (respectivement téléphonique).

L'équipement intermédiaire SP peut être réalisé sous la forme de circuits électroniques, de modules logiciels (ou informatiques), ou d'une combinaison de circuits et de logiciels.

## Revendications

1. Procédé d'adaptation de communication dans un réseau de communication à coeur de réseau de services (CR), **caractérisé en ce qu'**il consiste à adjoindre à des profils d'usagers, abonnés à des services dudit réseau, un champ d'information décrivant au moins une limitation physique, et en cas de réception d'un message de signalisation concernant une communication impliquant un usager dont le profil d'usager décrit une limitation physique donnée, à adjoindre audit message de signalisation un entête représentatif de cette limitation physique, de sorte que lorsqu'un équipement de communication impliqué dans ladite communication avec ledit usager reçoit ledit message de signalisation, il adapte, s'il est concerné et s'il le désire, le type et/ou au moins un paramètre de la communication avec ledit usager en fonction de ladite limitation physique.

2. Procédé selon la revendication 1, **caractérisé en ce que** chaque adaptation est choisie dans un groupe comprenant au moins une augmentation de la taille de la police de caractère d'un texte à afficher sur un écran, une conversion de données audio en données textuelles, une conversion de données textuelles en données audio, un changement d'un mode d'appel par sonneries en un mode d'appel par vibrations, et une utilisation de messages textuels, éventuellement de type instantané, à la place d'une communication téléphonique.

3. Procédé selon l'une des revendications 1 et 2, **caractérisé en ce que** chaque limitation physique est choisie dans un groupe comprenant au moins une déficience visuelle, une cécité, une déficience auditive, une surdité, une paralysie, et une incapacité à décrocher et/ou à saisir des caractères alphanumériques.

4. Procédé selon l'une des revendications 1 à 3, **caractérisé en ce que** l'adjonction auxdits messages de signalisation des entêtes représentatifs de limitation(s) physique(s) peut se faire dans un module de type S-CSCF (SP).

5. Coeur de réseau de services (CR) pour un réseau de communication, **caractérisé en ce qu'**il comprend i) des moyens de stockage d'informations d'usagers (MS) propres à stocker des profils d'usagers, abonnés à des services dudit réseau, comportant un champ d'information décrivant au moins une limitation physique, et ii) un équipement intermédiaire de traitement de messages de signalisation (SP) agencé, en cas de réception d'un message de signalisation concernant une communication impliquant un usager dont le profil d'usager décrit une limitation physique donnée, pour adjoindre audit message de signalisation un entête représentatif de cette limitation physique.

6. Coeur de réseau selon la revendication 5, **caractérisé en ce que** chaque limitation physique est choisie dans un groupe comprenant au moins une déficience visuelle, une cécité, une déficience auditive, une surdité, une paralysie, et une incapacité à décrocher et/ou à saisir des caractères alphanumériques.

7. Coeur de réseau selon l'une des revendications 5 et 6, **caractérisé en ce que** chaque entête adjoint à un message de signalisation est propre à permettre à un équipement de communication qui reçoit ce dernier et qui est impliqué dans une communication avec un usager dont le profil d'usager décrit une limitation physique donnée, d'adapter, s'il est concerné et s'il le désire, le type et/ou au moins un paramètre de la communication avec ledit usager en fonction de ladite limitation physique.

8. Coeur de réseau selon la revendication 7, **caractérisé en ce que** chaque adaptation est choisie dans un groupe comprenant au moins une augmentation de la taille de la police de caractère d'un texte à afficher sur un écran, une conversion de données audio en données textuelles, une conversion de données textuelles en données audio, un changement d'un mode d'appel par sonneries en un mode d'appel par vibrations, et une utilisation de messages textuels, éventuellement de type instantané, à la place d'une communication téléphonique.

9. Coeur de réseau selon l'une des revendications 5 à 8, **caractérisé en ce que** ledit équipement intermédiaire de traitement de messages de signalisation (SP) est un module de type S-CSCF.

## Claims

1. A communication adaptation method within a communication network with a service core network (CR), **characterized in that** it consists of adding to profiles of users who are subscribers to services of said network, an information field describing at least one physical limitation, and if a signaling message is received pertaining to a communication involving a user whose user profile describes a given physical limitation, of adding to said signaling message a header representative of that physical limitation, so that when a communication device involved in said communication with said user receives said signaling message, it adapts, if he or she is concerned and so desires, the type and/or at least one parameter of the communication with said user based on said physical limitation.

2. A method according to claim 1, **characterized in that** each adaptation is chosen from a group comprising at least one increase in the font size of a text to be displayed on a screen, one conversion of audio data into text data, one conversion of text data into audio data, one change from a ringing call mode to a vibrating call mode, and one usage of text messages, potentially instant ones, in place of a telephone communication.

3. A method according to one of the claims 1 and 2, **characterized in that** each physical limitation is chosen from a group comprising at least one vision impairment, one blindness, one hearing impairment, one deafness, one paralysis, and one inability to pick up and/or enter alphanumeric characters.

4. A method according to one of the claims 1 to 3, **characterized in that** the addition to said signaling messages of headers representative of physical limitations may be carried out in an S-CSCF (SP) module.

5. A service core network (CR) for a communication network, **characterized in that** it comprises i) means of storing user information (MS) capable of storing profiles of users who are subscribers to services of said network, comprising an information field describing at least one physical limitation, and ii) an intermediary signaling message processing device (SP) operative, if a signaling message is received pertaining to a communication involving a user whose user profile describes a given physical limitation, of adding to said signaling message a header representative of that physical limitation.

6. A core network according to claim 5, **characterized in that** each physical limitation is chosen from a group comprising at least one vision impairment, one blindness, one hearing impairment, one deafness, one paralysis, and one inability to pick up and/or enter alphanumeric characters.

7. A core network according to one of the claims 5 and 6, **characterized in that** each header added to a signaling message is capable of enabling a communication device that receives it and is involved in a communication involving a user whose user profile describes a given physical limitation, of adapting, if he or she is concerned and so desires, the type and/or at least one parameter of the communication with said user based on said physical limitation.

8. A core network according to claim 7, **characterized in that** each adaptation is chosen from a group comprising at least one increase in the font size of a text to be displayed on a screen, one conversion of audio data into text data, one conversion of text data into audio data, one change from a ringing call mode to a vibrating call mode, and one usage of text messages, potentially instant ones, in place of a telephone communication.

9. A core network according to one of the claims 5 to 8, **characterized in that** said intermediary signaling message processing device (SP) is an S-CSCF module.

## Patentansprüche

1. Verfahren zur Kommunikationsanpassung in einem Kommunikationsnetzwerk mit Dienste-Netzwerkkern (CR), **dadurch gekennzeichnet, dass** es darin besteht, Profilen von Benutzern, die Dienste des besagten Netzwerks abonniert haben, ein Informationsfeld hinzuzufügen, in welchem mindestens eine körperliche Einschränkung beschrieben wird, und im Fall des Empfangs einer Signalisierungsnachricht, die eine Kommunikation betrifft, an welcher ein Benutzer, dessen Benutzerprofil eine gegebene körperliche Einschränkung beschreibt, beteiligt ist, der besagten Signalisierungsnachricht einen für diese körperliche Einschränkung repräsentativen Header hinzuzufügen, so dass, wenn eine an der besagten Kommunikation mit dem besagten Benutzer beteiligte Kommunikationseinrichtung die besagte Signalisierungsnachricht empfängt, diese, wenn sie betroffen ist und dieses wünscht, den Typ und/oder mindestens einen Parameter der Kommunikation mit dem besagten Benutzer gemäß der besagten körperlichen Einschränkung anpasst.

2. Verfahren nach Anspruch 1, **dadurch gekennzeichnet, dass** jede Anpassung in einer Gruppe gewählt wird, welche mindestens eine Vergrößerung der Schriftzeichen eines auf einem Bildschirm anzuzeigenden Textes, eine Konvertierung von Audiodaten in Textdaten, eine Konvertierung von Textdaten in Audiodaten, einen Wechsel von einem Anrufmodus mit akustischer Anrufsignalisierung zu einem Anrufmodus mit Anrufsignalisierung per Vibration, und eine Verwendung von Textnachrichten, gegebenenfalls vom Typ Sofortnachricht, anstelle einer Telefonkommunikation umfasst.

3. Verfahren nach einem der Ansprüche 1 und 2, **dadurch gekennzeichnet, dass** jede körperliche Einschränkung in einer Gruppe gewählt wird, welche mindestens eine Sehbehinderung, eine Blindheit, einen Hörverlust, eine Gehörlosigkeit, eine Lähmung und eine Unfähigkeit, den Hörer abzunehmen und/oder alphanumerische Zeichen einzugeben, umfasst.

4. Verfahren nach einem der Ansprüche 1 bis 3, **dadurch gekennzeichnet, dass** das Hinzufügen der für eine oder mehrere körperliche Einschränkung(en) repräsentativen Headers zu den Signalisierungsnachrichten in einem Modul vom Typ S-CSCF (SP) erfolgen kann.

5. Dienste-Netzwerkkern (CR) für ein Kommunikationsnetzwerk, **dadurch gekennzeichnet, dass** es umfasst: i) Mittel zum Speichern von Benutzerinformationen (MS), die geeignet sind, Profile von Benutzern, welche Dienste des besagten Netzwerks abonniert haben, mit einem Informationsfeld, in welchem mindestens eine körperliche Einschränkung beschrieben wird, zu speichern, und ii) eine Zwischeneinrichtung für die Verarbeitung von Signalisierungsnachrichten (SP), welches dazu ausgelegt ist, im Fall des Empfangs einer Signalisierungsnachricht in Bezug auf eine Kommunikation, an welcher ein Benutzer beteiligt ist, dessen Benutzerprofil eine gegebene körperliche Einschränkung beschreibt, der besagten Signalisierungsnachricht einen für diese körperliche Einschränkung repräsentativen Header hinzuzufügen.

6. Netzwerkkern nach Anspruch 5, **dadurch gekennzeichnet, dass** jede körperliche Einschränkung in einer Gruppe gewählt wird, welche mindestens eine Sehbehinderung, eine Blindheit, einen Hörverlust, eine Gehörlosigkeit, eine Lähmung und eine Unfähigkeit, den Hörer abzunehmen und/oder alphanumerische Zeichen einzugeben, umfasst.

7. Netzwerkkern nach einem der Ansprüche 5 und 6, **dadurch gekennzeichnet, dass** jeder einer Signalisierungsnachricht hinzugefügte Header geeignet ist, es einer Kommunikationseinrichtung, welche diesen empfängt und an einer Kommunikation mit einem Benutzer, dessen Benutzerprofil eine gegebene körperliche Einschränkung beschreibt, beteiligt ist, zu ermöglichen, wenn sie betroffen ist oder dieses wünscht, den Typ und/oder mindestens einen Parameter der Kommunikation mit dem besagten Benutzer in Abhängigkeit von der besagten körperlichen Einschränkung anzupassen.

8. Netzwerkkern nach Anspruch 7, **dadurch gekennzeichnet, dass** jede Anpassung in einer Gruppe gewählt wird, welche mindestens eine Vergrößerung der Schriftzeichen eines auf einem Bildschirm anzuzeigenden Textes, eine Konvertierung von Audiodaten in Textdaten, eine Konvertierung von Textdaten in Audiodaten, einen Wechsel von einem Anrufmodus mit akustischer Anrufsignalisierung zu einem Anrufmodus mit Anrufsignalisierung per Vibration, und eine Verwendung von Textnachrichten, gegebenenfalls vom Typ Sofortnachricht, anstelle einer Telefonkommunikation umfasst.

9. Netzwerkkern nach einem der Ansprüche 5 bis 8, **dadurch gekennzeichnet**, die besagte Zwischeneinrichtung für die Verarbeitung von Signalisierungsnachrichten (SP) ein Modul vom Typ S-CSCF ist.
